# EUROPEAN PATENT APPLICATION

(11) **EP 4 117 138 A1**
(43) Date of publication of application: **11.01.2023**
(21) Application number: 21764078.8
(22) Date of filing: 02.03.2021
(51) Int. Cl.: H02J 7/00, H01M 10/44

(54) **BATTERY CHARGING CURVE LEARNING APPARATUS AND CHARGER**

(30) Priority: 02.03.2020 HK 32020003598
(71) Applicant: Menriyan Wireless High Power Technology UK Limited, NT. Hong Kong (CN)
(72) Inventor: LAM, Wing Ming, Hong Kong (CN)
(74) Representative: Lavoix
(86) International application number: PCT/CN2021/078678
(87) International publication number: WO 2021/175212

(57) **Abstract**

A battery charging curve learning apparatus comprises: a loading module connected to a target charger, a first sampling module connected to the loading module, a boosting module connected to the target charger, and a controller connected to the loading module, the first sampling module, and the boosting module; the loading module is configured to simulate a load to make the target charger output the maximum power within the current time; the first sampling module is configured to collect the current output current and the current output voltage of the target charger, and send the collected parameters to the controller; the boosting module is configured to provide a starting voltage for the target charger; the controller is configured to control the operation of the loading module, the first sampling module, and the boosting module, and perform charging timer to obtain the charging time, and then obtain the charging curve of the battery applicable to the target charger according to the collection parameters of the sampling module and the charging time. It has strong versatility and can charge a variety of batteries.

## Description

### FIELD OF THE INVENTION

The present invention relates to the battery charging technology, and particularly to a battery charging curve learning apparatus and charger.

### BACKGROUND OF THE INVENTION

Nowadays, there are many types of rechargeable batteries, and mainly including lead-acid batteries and lithium batteries.

Due to the different principles of different types of batteries, the charging requirements of each type of battery are also different. If charging voltage, charging current and charging time conditions do not match each other during charging, it not only may cause energy waste and damage the battery, but also may cause the battery to explode. Therefore, the coordination of battery charging voltage, current and charging time is very important.

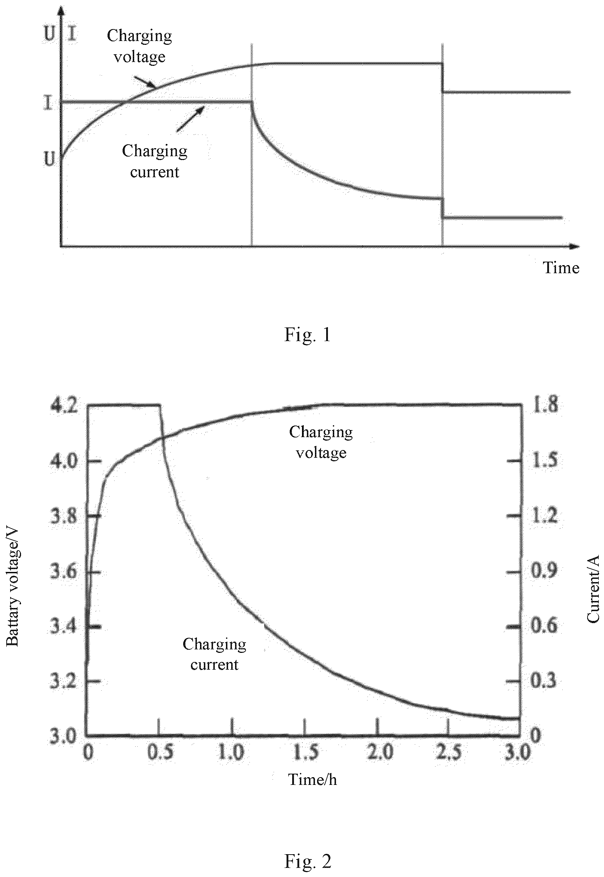

The voltage, current and time required for battery charging are indicated in the form of a battery charging curve. Figure 1 shows the charging curve data of a lead-acid battery, while Figure 2 shows the charging curve data of a lithium battery.

At present, the corresponding special chargers are generally developed for specific types of batteries, resulting in a wide variety of chargers, causing great inconvenience to users and manufacturers.

### SUMMARY OF THE INVENTION

In view of the problems in the prior art, the present invention provides a battery charging curve learning apparatus and charger, which at least partially solve the problems in the prior art.

In order to achieve the above objectives, the present invention adopts the following technical solutions.

In one embodiment, a battery charging curve learning apparatus comprises: a loading module connected to a target charger, a first sampling module connected to the loading module, a boosting module connected to the target charger, and a controller connected to the loading module, the first sampling module, and the boosting module;
the loading module is configured to simulate a load to make the target charger output the maximum power within the current time;
the first sampling module is configured to collect the current output current and the current output voltage of the target charger, and send the collected parameters to the controller;
the boosting module is configured to provide a starting voltage for the target charger;
the controller is configured to control the operation of the loading module, the first sampling module, and the boosting module, and perform charging timer to obtain the charging time, and then obtain the charging curve of the battery applicable to the target charger according to the collection parameters of the sampling module and the charging time.

The battery charging curve learning apparatus further comprises: a second sampling module connected to the boosting module; wherein the second sampling module is configured to collect and control the startup voltage of the target charger, and immediately turn off the boosting module output after the target charger outputs the voltage, and switch to the loading module to work.

The battery charging curve learning apparatus further comprises: an internal power supply configured to supply power to each module.

The battery charging curve learning apparatus further comprises: an internal power supply circuit; wherein the internal power supply circuit is connected between the target charger and the internal power supply, and is configured to take power from the target power source and supply it to the internal power source.

The battery charging curve learning apparatus further comprises: a display module connected with the controller.

The battery charging curve learning apparatus further comprises: a communication module connected with the controller to output the charging curve.

In another embodiment, a charger comprises: a battery charging curve learning apparatus and a charging device connected to the battery charging curve learning apparatus;
the battery charging curve learning apparatus comprises: a loading module connected to a target charger, a first sampling module connected to the loading module, a boosting module connected to the target charger, and a controller connected to the loading module, the first sampling module, and the boosting module;
   the loading module is configured to simulate a load to make the target charger output the maximum power within the current time;
   the first sampling module is configured to collect the current output current and the current output voltage of the target charger, and send the collected parameters to the controller;
   the boosting module is configured to provide a starting voltage for the target charger;
   the controller is configured to control the operation of the loading module, the first sampling module, and the boosting module, and perform charging timer to obtain the charging time, and then obtain the charging curve of the battery applicable to the target charger according to the collection parameters of the sampling module and the charging time;
the charging device performs charging according to the charging curve obtained by the battery charging curve learning apparatus.

The controller of the battery charging curve learning apparatus controls the charging device to charge according to the charging curve.

The battery charging curve learning apparatus further comprises: a communication module configured to transmit the charging curve to the charging device;
the charging device comprises: a charging circuit and a control module connected to the charging circuit and the communication module;
the control module is configured to receive the charging curve, and control the operation of the charging circuit according to the received charging curve.

The present invention provides a battery charging curve learning apparatus and a charger, the battery charging curve learning apparatus comprises: a loading module connected to a target charger, a first sampling module connected to the loading module, a boosting module connected to the target charger, and a controller connected to the loading module, the first sampling module, and the boosting module; wherein the loading module is configured to simulate the load to make the target charger output the maximum power within the current time; the first sampling module is configured to collect the current output current and current output voltage of the target charger, and send the collected parameters to the controller; the boost module is configured to provide a starting voltage for the target charger; the controller is configured to control the operation of the loading module, the first sampling module, and the boosting module, and perform charging timer to obtain the charging time, and then obtain the battery charging curve suitable for the target charger according to the collection parameters of the first sampling module and the charging time; the charging device in the charger performs charging according to the charging curve obtained by the battery charging curve learning apparatus; by reading the charging data of the target charger, the charging data curve with the charger is automatically learned and obtained, which can replace the special battery charger to charge the special battery. It has strong versatility and can charge a variety of batteries.

In order to make the above and other objects, features and advantages of the present invention more comprehensible, the following is specifically cited with preferred embodiments, in conjunction with the accompanying drawings, and describe them in detail as follows.

### BRIEF DESCRIPTION OF THE DRAWINGS

In order to more clearly illustrate the technical solutions in the embodiments of the present application or the prior art, the following briefly introduces the drawings that need to be used in the description of the embodiments or the prior art. Obviously, the drawings in the following description are some embodiments of the application, for those of ordinary skill in the art, other drawings can be obtained from these drawings without creative work.
Figure 1 shows the charging curve data of the lead-acid battery;
Figure 2 shows the charging curve data of the lithium battery;
Figure 3a is a structural diagram of the learning process of the battery charging curve learning apparatus provided by an embodiment of the present invention;
Figure 3b is a structural diagram of the battery charging curve learning apparatus in the application process provided by an embodiment of the present invention;
Figure 4 shows a structural block diagram of the battery charging curve learning apparatus provided by an embodiment of the present invention;
FIG. 5 shows another structural block diagram of the battery charging curve learning apparatus provided by an embodiment of the present invention;
Figure 6a is an architecture diagram of the charger in the learning process provided by an embodiment of the present invention;
Figure 6b is an architecture diagram of the charger in the learning process provided by an embodiment of the present invention.

### DETAILED DESCRIPTION OF THE INVENTION

In order to enable those skilled in the art to better understand the solution of the present application, the technical solutions in the embodiments of the present application is described clearly and completely in conjunction with the accompanying drawings in the embodiments of the present application. Obviously, the described embodiments are only a part of the embodiments of the present application, rather than all the embodiments. Based on the embodiments in the application, all other embodiments obtained by those of ordinary skill in the art without creative work shall fall within the scope of protection of the application.

The detailed features and advantages of the present invention are described in the following embodiments, and the content is sufficient to enable any person skilled in the art to understand the technical content of the present invention and implement it accordingly. According to the content, claims, and drawings disclosed in the specification, any person skilled in the art can easily understand the related objectives and advantages of the present invention. The following examples further illustrate the viewpoints of the present invention in detail, but do not limit the scope of the present invention.

It should be noted that the embodiments in the application and the features in the embodiments can be combined with each other if there is no conflict. Hereinafter, the present application is described in detail with reference to the drawings and in conjunction with the embodiments.

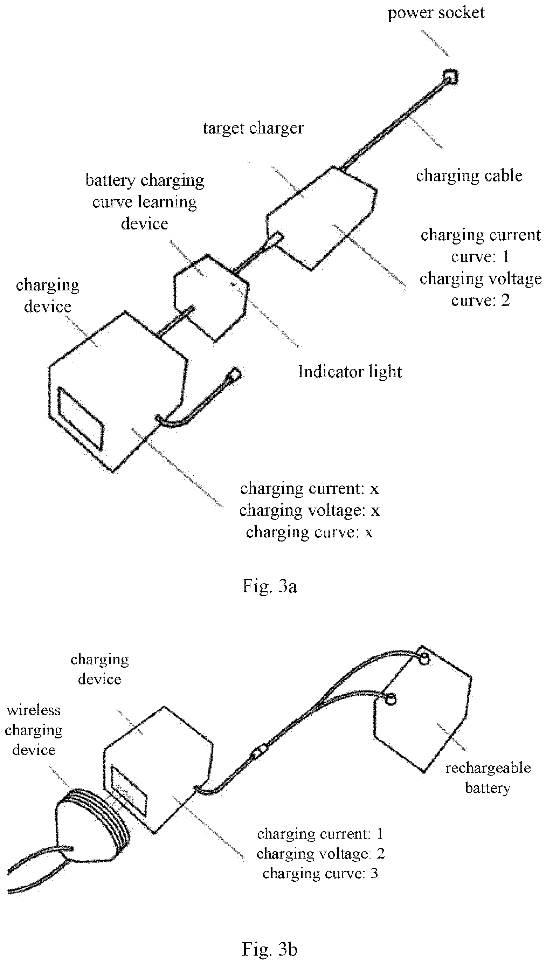

Figure 3a is a structural diagram of the learning process of a battery charging curve learning apparatus provided by an embodiment of the present invention. As shown in Figure 3a, connecting a target charger (special charger for a certain type of battery) to a power socket through a charging cable, the charging current curve of the target charging is represented by 1, and the charging voltage curve is represented by 2.

The battery charging curve learning apparatus provided by the embodiment of the present invention is connected to the target charger through the charging cable. After the target charger is powered on, an indicator light on the battery charging curve learning apparatus starts to flash, the battery charging curve learning apparatus automatically obtains charging information such as the charging current and charging voltage of the target charger. When the indicator light is on, it means that the charging information of the target charger has been read.

The battery charging curve learning apparatus records the charging current, charging voltage and charging time at each moment, obtains the charging curve based on those information, and sends to the charging device connected to the battery charging curve learning apparatus. Referring to Figure 3b, the charging device that has obtained the charging curve of the target charger charges the corresponding rechargeable battery (the battery originally needs the target charger to charge) according to the charging curve in the application stage. Specifically: adjusting its own charging data according to the obtained charging curve or charging information, and then outputting the charging.

Those skilled in the art can understand that the battery charging curve learning apparatus may not be provided with an indicator light, or other forms of indicator elements may be used, which is not limited in the embodiment of the present invention.

On the other hand, those skilled in the art can understand that there may be the battery charging curve learning apparatus that obtains the charging curve according to the acquired charging information, or there may also be the battery charging curve learning apparatus that sends the collected charging information to the charging device, and the control module in the charging device obtains the charging curve according to the charging information, which is not limited in the embodiment of the present invention.

By adopting the above solution, the battery charging curve learning apparatus can learn the charging curve or charging information of the target charger, and send the charging curve or charging information to the charging device, so that the charging device can be used to replace the target charger to charge the corresponding battery.

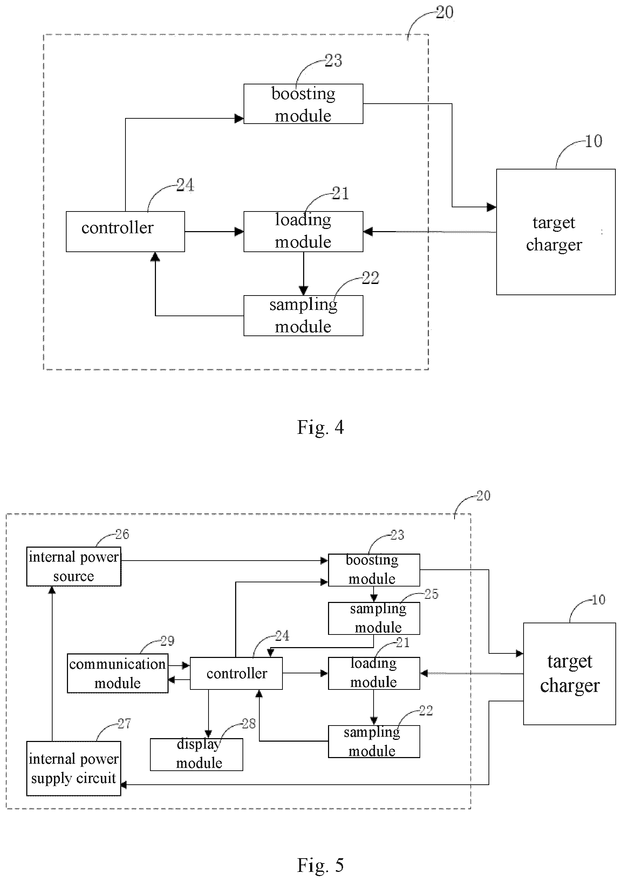

Figure 4 shows a structural block diagram of the battery charging curve learning apparatus provided by an embodiment of the present invention. As shown in Figure 4, the battery charging curve learning apparatus 20 may include: a loading module 21 connected to a target charger 10, a sampling module 22 connected to the load module 21, a boosting module 23 connected to the target charger 10, and a controller 24 connected to the load module 21, the sampling module 22, and the boosting module 23, wherein:
the loading module 21 is configured to simulate a load to make the target charger 10 output the maximum power within the current time;
the sampling module 22 is configured to collect the current output current and the current output voltage of the target charger 10, and send the collection parameters to the controller 24; in addition, the sampling module 22 is also configured to stabilize the output current value and voltage value to ensure that the current power is maximized;
the boosting module 23 is configured to provide a starting voltage for the target charger 10;
the controller 21 is configured to control the work of the loading module 21, the sampling module 22, and the boosting module 23, and perform charging timer to obtain the charging time, and then obtain the charging curve of the battery applicable to the target charger 10 according to the collection parameters of the sampling module 22 and the charging time, or, save the collection parameters of the sampling module 22 and the charging time; the controller can be implemented by MCU.

The charging voltage includes one or more of: starting charging voltage/constant current voltage/constant voltage voltage/trickle voltage.

The charging current includes one or more of: charging current/constant current current/constant voltage current/trickle current, etc.

In addition, the charging device can save the charging curve and the charging voltage and current information in its internal memory (such as EEROM, FLASH or MCU internal data storage), so that the charging current and the charging voltage can be calibrated when the charger is used for charging.

It is worth noting that because some target chargers have output protection functions, the boosting module is used to provide basic power (or startup voltage), otherwise the target charger does not output voltage for charging.

The battery charging curve learning apparatus provided by the embodiment of the present invention automatically learns and obtains the charging data curve with the charger by reading the charging data of the target charger, so that it can replace the special battery charger to charge the special battery. The present invention has strong versatility and can be used to charge a variety of batteries.

In an optional embodiment, referring to Figure. 5, the battery charging curve learning apparatus may further include: a sampling module 25 connected to the boosting module 23 and the controller 24, wherein the sampling module is configured to collect and control the startup voltage of the target charger, and immediately turn off the output of the boosting module after the target charger outputs the voltage, and then switch to the load module to work.

In an optional embodiment, continuing to refer to Figure 5, the battery charging curve learning apparatus further includes: an internal power supply for supplying power to each module, wherein the internal power supply can be powered by a battery.

In a further embodiment, continuing to refer to FIG. 5, the battery charging curve learning apparatus further includes: an internal power supply circuit 27, wherein the internal power supply circuit 27 is connected between the target charger 10 and the internal power source 26, and is configured to take power from the target power source and supply it to the internal power source to ensure that the internal power source has sufficient power.

In an optional embodiment, continuing to refer to Figure 5, the battery charging curve learning apparatus further includes: a display module 28 connected to the controller 24, wherein the display module 28 is configured to display various information, such as charging current, charging voltage, charging time, and charging status.

In an optional embodiment, the battery charging curve learning apparatus further includes: a communication module 29 connected with the controller 24, the communication module is configured to output the charging curve, charging information, etc., or to receive external commands or data to be transmitted to the controller. The communication module 29 may be a wired communication module or a wireless communication module, such as Bluetooth, WIFI, mobile communication, etc.

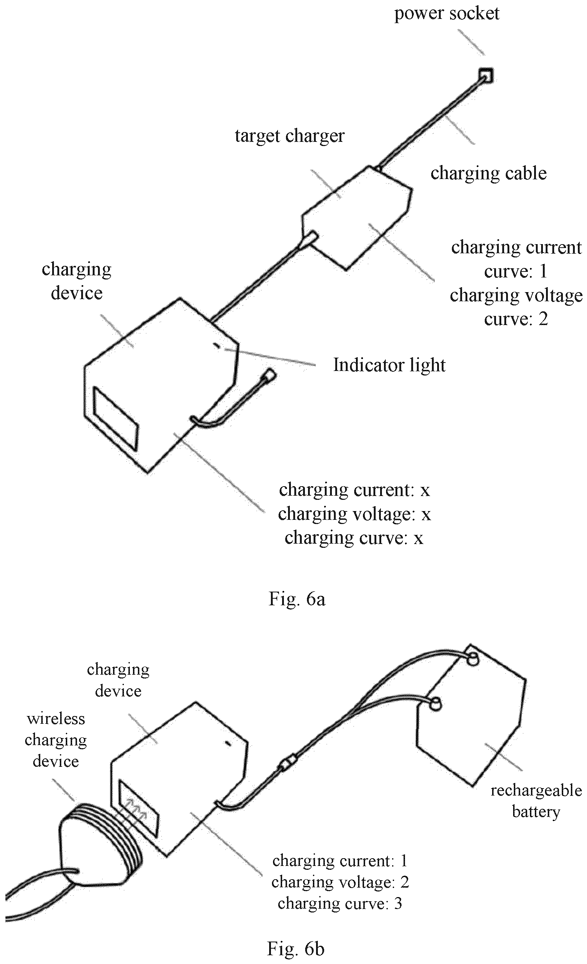

It is worth noting that the battery charging curve learning apparatus provided by the embodiment of the present invention can be used as a separate device and is designed separately from the matching charging device. In the learning stage, the battery charging curve learning apparatus is configured to learn the charging parameters, while in the charging application stage, the charging device can be used alone to replace the target charger to charge the responding battery. It is also possible to integrate the battery charging curve learning apparatus and the matching charging device into a charger. Please refer to Figure 6a and Figure 6b, in the learning phase, the target charger is connected to the power socket through the charger power cord, and the charger integrated with the battery charging curve learning apparatus and the matching charging device provided in the embodiment of the present invention is connected to the target charger, and the target charger is powered on, so that the charger provided by the embodiment of the present invention learns the charging parameters of the target charger; while in the charging application stage, the charger is connected to a rechargeable battery to charge the battery.

It is worth noting that the charger or the charging device provided in the embodiment of the present invention can charge the battery in a wired or wireless manner, and can also obtain power in a wired or wireless manner, which is not limited in the embodiment of the present invention.

The charger provided by the embodiment of the present invention includes: the above-mentioned battery charging curve learning apparatus and the charging device connected to the battery charging curve learning apparatus. The charging device performs charging according to the charging curve or charging parameters obtained by the battery charging curve learning apparatus.

In an optional embodiment, the battery charging curve learning apparatus and the charging device share the controller, which can be set in the battery charging curve learning apparatus or the charging device. When the controller is set in the battery charging curve learning apparatus, the controller controls the charging device to charge according to the charging curve. When the controller is set in the charging device, the sampling module sends the collected charging information to the controller of the charging device.

In another optional embodiment, the battery charging curve learning apparatus and the charging device are respectively provided with the controller. The battery charging curve learning apparatus includes: a communication module connected between the battery charging curve learning apparatus and the controller of the charging device. The communication module is configured to transmit the charging curve to the charging device. The charging device includes: a charging circuit, a control module connected to the charging circuit and the communication module. The control module is configured to receive the charging curve or charging parameter, and control the operation of the charging circuit according to the received charging curve.

The battery charging curve learning apparatus and the charger provided in the embodiments of the present invention automatically learn and obtain the charging data curve with the charger by reading the charging data of the target charger. Therefore, it can replace the special battery charger to charge the special battery, and it has strong versatility, and can charge a variety of batteries.

In the present invention, specific examples are used to explain the principles and implementation of the present invention. The description of the above examples is only used to help understand the method and core idea of the present invention. For those of ordinary skill in the art, according to the idea of the present invention, there will be changes in the specific implementation and the scope of application. The content of this specification should not be construed as limiting the present invention.

It should also be noted that the terms "comprise", "include" or any other variants thereof are intended to cover non-exclusive inclusion, so that a process, method, commodity or equipment including a series of elements not only includes those elements, but also includes the other elements that are not explicitly listed, or they also include elements inherent to such processes, methods, commodities, or equipment. If there are no more restrictions, the element defined by the sentence "include a..." does not exclude the existence of other identical elements in the process, method, commodity, or equipment that includes the element.

The various embodiments in this specification are described in a progressive manner, and the same or similar parts between the various embodiments can be referred to each other, and each embodiment focuses on the differences from other embodiments. In particular, for the system embodiment, since it is basically similar to the method embodiment, the description is relatively simple, and the relevant parts can be referred to the part of the description of the method embodiment.

The above are only preferred embodiments of the present invention, and do not limit the present invention in any form. Although the present invention has been disclosed in the preferred embodiments as above, it is not intended to limit the present invention. Anyone skilled in the art, without departing from the scope of the technical solution of the present invention, can make some changes or modifications into equivalent embodiments with equivalent changes by using the technical content disclosed above. Without departing from the technical solution of the present invention, any simple modifications, equivalent changes and modifications made to the above embodiments based on the technical essence of the present invention still fall within the scope of the technical solution of the present invention.

## Claims

1. A battery charging curve learning apparatus, comprises: a loading module connected to a target charger, a first sampling module connected to the loading module, a boosting module connected to the target charger, and a controller connected to the loading module, the first sampling module, and the boosting module;
the loading module is configured to simulate a load to make the target charger output the maximum power within the current time;
the first sampling module is configured to collect the current output current and the current output voltage of the target charger, and send the collected parameters to the controller;
the boosting module is configured to provide a starting voltage for the target charger;
the controller is configured to control the operation of the loading module, the first sampling module, and the boosting module, and perform charging timer to obtain the charging time, and then obtain the charging curve of the battery applicable to the target charger according to the collection parameters of the sampling module and the charging time.

2. The battery charging curve learning apparatus of claim 1, further comprises: a second sampling module connected to the boosting module;
the second sampling module is configured to collect and control the startup voltage of the target charger, and immediately turn off the boosting module output after the target charger outputs the voltage, and switch to the loading module to work.

3. The battery charging curve learning apparatus of claim 1, further comprises: an internal power supply configured to supply power to each module.

4. The battery charging curve learning apparatus of claim 3, further comprises: an internal power supply circuit;
the internal power supply circuit is connected between the target charger and the internal power supply, and is configured to take power from the target power source and supply it to the internal power source.

5. The battery charging curve learning apparatus of claim 1, further comprises: a display module connected with the controller.

6. The battery charging curve learning apparatus of claim 1, further comprises: a communication module connected with the controller to output the charging curve.

7. A charger comprises: a battery charging curve learning apparatus and a charging device connected to the battery charging curve learning apparatus;
the battery charging curve learning apparatus comprises: a loading module connected to a target charger, a first sampling module connected to the loading module, a boosting module connected to the target charger, and a controller connected to the loading module, the first sampling module, and the boosting module;
the loading module is configured to simulate a load to make the target charger output the maximum power within the current time;
the first sampling module is configured to collect the current output current and the current output voltage of the target charger, and send the collected parameters to the controller;
the boosting module is configured to provide a starting voltage for the target charger;
the controller is configured to control the operation of the loading module, the first sampling module, and the boosting module, and perform charging timer to obtain the charging time, and then obtain the charging curve of the battery applicable to the target charger according to the collection parameters of the sampling module and the charging time;
the charging device performs charging according to the charging curve obtained by the battery charging curve learning apparatus.

8. The battery charging curve learning apparatus of claim 7, wherein the controller of the battery charging curve learning apparatus controls the charging device to charge according to the charging curve.

9. The battery charging curve learning apparatus of claim 7, wherein the battery charging curve learning apparatus further comprises: a communication module configured to transmit the charging curve to the charging device;
the charging device comprises: a charging circuit and a control module connected to the charging circuit and the communication module;
the control module is configured to receive the charging curve, and control the operation of the charging circuit according to the received charging curve.
